# EUROPEAN PATENT APPLICATION

(11) **EP 4 020 217 A1**
(43) Date of publication of application: **29.06.2022**
(21) Application number: 21210086.1
(22) Date of filing: 24.11.2021
(51) Int. Cl.: G06F 11/34, G06F 8/30

(54) **PERFORMANCE MONITORING FOR OSGI APPLICATION WITH BUNDLES**

(30) Priority: 22.12.2020 US 202017130933
(71) Applicant: SAP SE, 69190 Walldorf (DE)
(72) Inventor: DING, Xuemin, 69190 Walldorf (DE)
(74) Representative: Müller-Boré & Partner Patentanwälte PartG mbB

(57) **Abstract**

Techniques for monitoring performance of an OSGi-based application having multiple bundles are disclosed. In some embodiments, a computer system performs operations comprising: running an OSGi application having a plurality of adapter bundles, the running of the OSGi application comprising using each one of the plurality of adapter bundles to connect to a corresponding source database and replicate data from the corresponding source database; running a profiler bundle concurrently with the running of the OSGi application, the profiler bundle being generated using an AOP extension, the running of the profiler bundle comprising collecting performance data for selected ones of the plurality of adapter bundles during the running of the OSGi application, the selected ones of the plurality of adapter bundles being defined based on input provided by a user via a GUI during the running of the OSGi application; and performing a function using the collected performance data.

## Description

### TECHNICAL FIELD

The present application relates generally to the technical field of electrical computer systems, and, in various embodiments, to systems and methods of monitoring performance of an Open Service Gateway Initiative (OSGi) application having multiple bundles.

### BACKGROUND

OSGI is a Java^{®} framework for developing and deploying modular software programs and libraries. An OSGI application may have multiple adapter bundles, and each adapter bundle may have its own class loader and be independent and separate from the other adapter bundles of the OSGI application. Current solutions for monitoring the performance of the different adapter bundles of an OSGI application suffer from technical problems. For example, although hardcoded tracing log methods may be used to monitor the behavior of the adapter bundles, adding hardcode involves stopping the running of the adapter bundles and adding a trace log manually every time the user wants to observe a new method. Furthermore, some adapter bundles depend on libraries that cannot be modified. In addition to the issues discussed above, other technical problems may arise as well.

### BRIEF DESCRIPTION OF THE DRAWINGS

Some example embodiments of the present disclosure are illustrated by way of example and not limitation in the figures of the accompanying drawings, in which like reference numbers indicate similar elements.
FIG. 1 is a network diagram illustrating a system, in accordance with some example embodiments.
FIG. 2 is a block diagram illustrating enterprise applications and services in an enterprise application platform, in accordance with some example embodiments.
FIG. 3 is a block diagram illustrating a performance monitoring system, in accordance with some example embodiments.
FIG. 4 illustrates a graphical user interface (GUI) in which a target platform is defined, in accordance with some example embodiments.
FIG. 5 illustrates a GUI in which AspectJ dependencies are added, in accordance with some example embodiments.
FIG. 6 illustrates code of a manifest file of a profiler bundle, in accordance with some example embodiments.
FIG. 7 illustrates a GUI in which a performance monitoring page is displayed, in accordance with some example embodiments.
FIG. 8 illustrates a profiler bundle acting as an aspect weaver, in accordance with some example embodiments.
FIG. 9 illustrates pseudocode combining a Boolean condition with a pointcut expression to enable selective control of performance monitoring on individual adapter bundles during runtime, in accordance with some example embodiments.
FIG. 10 illustrates a GUI in which a switch panel enables a user to selectively control performance monitoring on individual adapter bundles during runtime, in accordance with some example embodiments.
FIG. 11 is a flowchart illustrating a method of monitoring performance of an OSGi application having multiple bundles, in accordance with some example embodiments.
FIG. 12 is a flowchart illustrating a method of collecting performance data, in accordance with some example embodiments.
FIG. 13 is a block diagram of an example computer system on which methodologies described herein can be executed, in accordance with some example embodiments.

### DETAILED DESCRIPTION

Example methods and systems for monitoring performance of an OSGI-based application having multiple bundles are disclosed. In the following description, for purposes of explanation, numerous specific details are set forth in order to provide a thorough understanding of example embodiments. It will be evident, however, to one skilled in the art that the present embodiments can be practiced without these specific details.

The implementation of the features disclosed herein involves a non-generic, unconventional, and non-routine operation or combination of operations. By applying one or more of the solutions disclosed herein, some technical effects of the system and method of the present disclosure are to provide a computer system that is specially-configured to monitor performance of an OSGi-based application having multiple adapter bundles. In some example embodiments, a profiler bundle that has been generated using an aspect-oriented programming (AOP) extension is run concurrently with the OSGi-based application. The profiler bundle is configured to provide a user with the ability to selectively enable and disable the performance monitoring of the different adapter bundles of the OSGi-based application during the runtime. As a result, the user is able to dynamically and selectively control for which adapter bundles performance data is collected without interrupting the running of the OSGi-based application. Other technical effects will be apparent from this disclosure as well.

The methods or embodiments disclosed herein may be implemented as a computer system having one or more modules (e.g., hardware modules or software modules). Such modules may be executed by one or more hardware processors of the computer system. In some example embodiments, a non-transitory machine-readable storage device can store a set of instructions that, when executed by at least one processor, causes the at least one processor to perform the operations and method steps discussed within the present disclosure.

The details of one or more variations of the subject matter described herein are set forth in the accompanying drawings and the description below. Other features and benefits of the subject matter described herein will be apparent from the description and drawings, and from the claims.

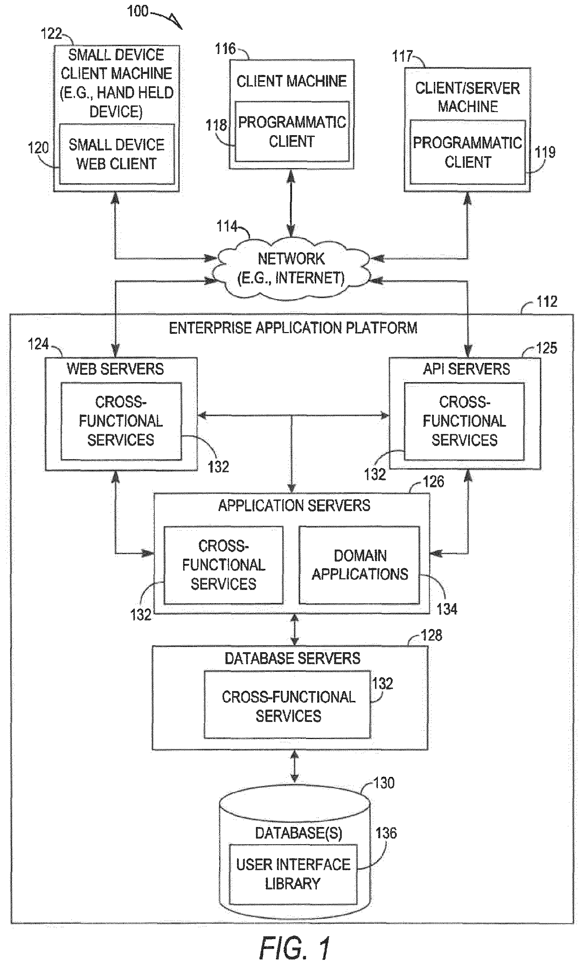

FIG. 1 is a network diagram illustrating a system 100, in accordance with some example embodiments. A platform (e.g., machines and software), in the example form of an enterprise application platform 112, provides server-side functionality, via a network 114 (e.g., the Internet) to one or more clients. FIG. 1 illustrates, for example, a client machine 116 with programmatic client 118 (e.g., a browser), a small device client machine 122 with a small device web client 120 (e.g., a browser without a script engine), and a client/server machine 117 with a programmatic client 119.

Turning specifically to the enterprise application platform 112, web servers 124 and Application Program Interface (API) servers 125 can be coupled to, and provide web and programmatic interfaces to, application servers 126. The application servers 126 can be, in turn, coupled to one or more database servers 128 that facilitate access to one or more databases 130. The web servers 124, API servers 125, application servers 126, and database servers 128 can host cross-functional services 132. The cross-functional services 132 can include relational database modules to provide support services for access to the database(s) 130, which includes a user interface library 136. The application servers 126 can further host domain applications 134. The web servers 124 and the API servers 125 may be combined.

The cross-functional services 132 provide services to users and processes that utilize the enterprise application platform 112. For instance, the cross-functional services 132 can provide portal services (e.g., web services), database services, and connectivity to the domain applications 134 for users that operate the client machine 116, the client/server machine 117, and the small device client machine 122. In addition, the cross-functional services 132 can provide an environment for delivering enhancements to existing applications and for integrating third-party and legacy applications with existing cross-functional services 132 and domain applications 134. In some example embodiments, the system 100 comprises a client-server system that employs a client-server architecture, as shown in FIG. 1. However, the embodiments of the present disclosure are, of course, not limited to a client-server architecture, and could equally well find application in a distributed, or peer-to-peer, architecture system.

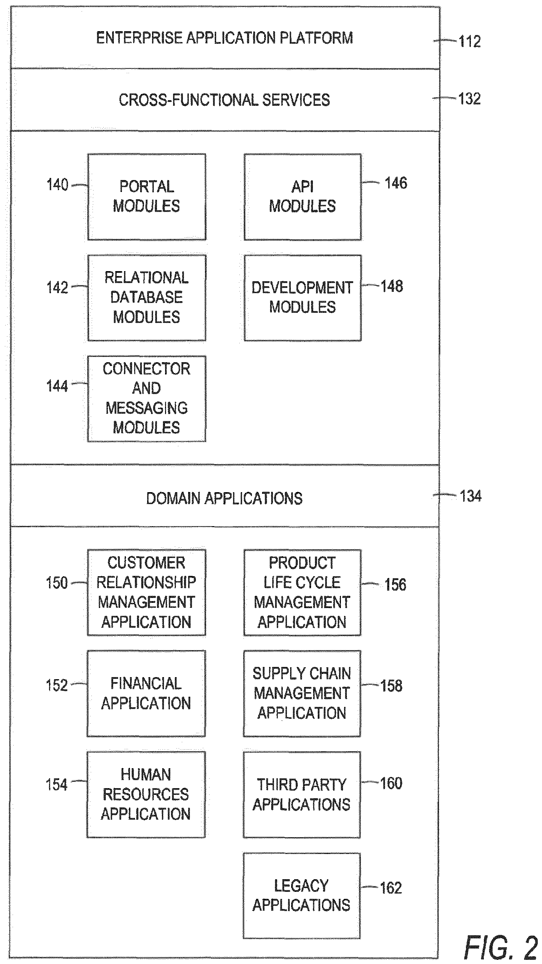

FIG. 2 is a block diagram illustrating enterprise applications and services in an enterprise application platform 112, in accordance with an example embodiment. The enterprise application platform 112 can include cross-functional services 132 and domain applications 134. The cross-functional services 132 can include portal modules 140, database modules 142 (e.g., relational database modules), connector and messaging modules 144, API modules 146, and development modules 148.

The portal modules 140 can enable a single point of access to other cross-functional services 132 and domain applications 134 for the client machine 116, the small device client machine 122, and the client/server machine 117. The portal modules 140 can be utilized to process, author and maintain web pages that present content (e.g., user interface elements and navigational controls) to the user. In addition, the portal modules 140 can enable user roles, a construct that associates a role with a specialized environment that is utilized by a user to execute tasks, utilize services, and exchange information with other users within a defined scope. For example, the role can determine the content that is available to the user and the activities that the user can perform. The portal modules 140 include a generation module, a communication module, a receiving module and a regenerating module. In addition, the portal modules 140 can comply with web services standards and/or utilize a variety of Internet technologies including JAVA^{®}, J2EE, SAP's Advanced Business Application Programming Language (ABAP^{®}) and Web Dynpro, XML, JCA, JAAS, X.509, LDAP, WSDL, WSRR, SOAP, UDDI and MICROSOFT^{®} .NET^{®}.

The database modules 142 can provide support services for access to the database(s) 130, which includes a user interface library 136. The database modules 142 can provide support for object relational mapping, database independence, and distributed computing. The database modules 142 can be utilized to add, delete, update, and manage database elements. In addition, the database modules 142 can comply with database standards and/or utilize a variety of database technologies including SQL, SQLDBC, Oracle, MySQL, Unicode, JDBC, or the like.

The connector and messaging modules 144 can enable communication across different types of messaging systems that are utilized by the cross-functional services 132 and the domain applications 134 by providing a common messaging application processing interface. The connector and messaging modules 144 can enable asynchronous communication on the enterprise application platform 112.

The API modules 146 can enable the development of service-based applications by exposing an interface to existing and new applications as services. Repositories can be included in the platform as a central place to find available services when building applications.

The development modules 148 can provide a development environment for the addition, integration, updating, and extension of software components on the enterprise application platform 112 without impacting existing cross-functional services 132 and domain applications 134.

Turning to the domain applications 134, a customer relationship management application 150 can enable access to and can facilitate collecting and storing of relevant personalized information from multiple data sources and business processes. Enterprise personnel that are tasked with developing a buyer into a longterm customer can utilize the customer relationship management applications 150 to provide assistance to the buyer throughout a customer engagement cycle.

Enterprise personnel can utilize financial applications 152 and business processes to track and control financial transactions within the enterprise application platform 112. The financial applications 152 can facilitate the execution of operational, analytical, and collaborative tasks that are associated with financial management. Specifically, the financial applications 152 can enable the performance of tasks related to financial accountability, planning, forecasting, and managing the cost of finance.

Human resource applications 154 can be utilized by enterprise personnel and business processes to manage, deploy, and track enterprise personnel. Specifically, the human resource applications 154 can enable the analysis of human resource issues and facilitate human resource decisions based on real-time information.

Product life cycle management applications 156 can enable the management of a product throughout the life cycle of the product. For example, the product life cycle management applications 156 can enable collaborative engineering, custom product development, project management, asset management, and quality management among business partners.

Supply chain management applications 158 can enable monitoring of performances that are observed in supply chains. The supply chain management applications 158 can facilitate adherence to production plans and on-time delivery of products and services.

Third-party applications 160, as well as legacy applications 162, can be integrated with domain applications 134 and utilize cross-functional services 132 on the enterprise application platform 112.

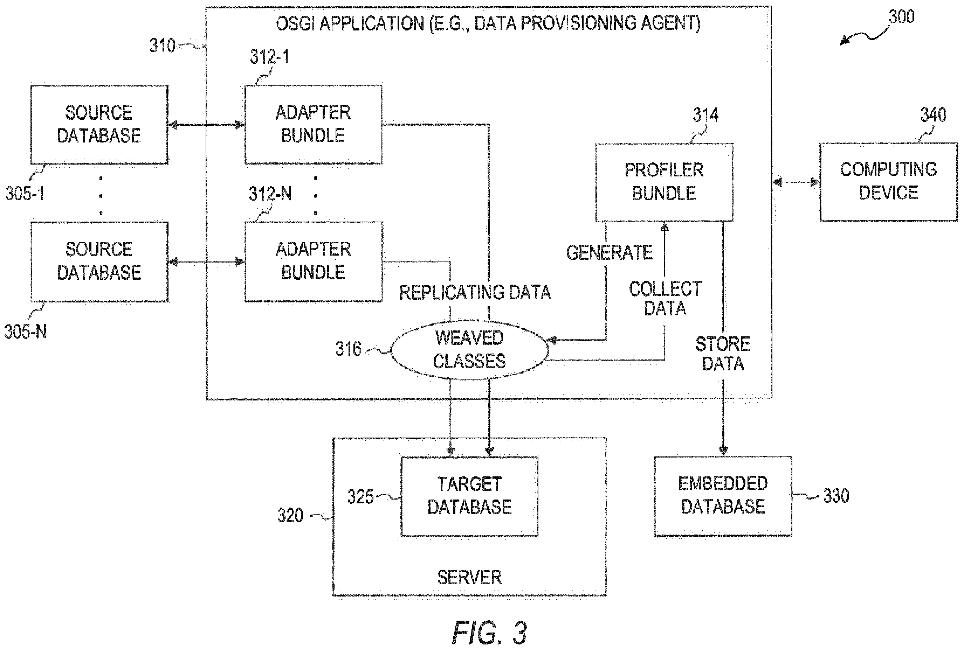

FIG. 3 is a block diagram illustrating a performance monitoring system 300, in accordance with some example embodiments. The performance monitoring system 300 runs an OSGi application 310 having a plurality of adapter bundles 312 (e.g., adapter bundle 312-1, ..., adapter bundle 312-N). In some example embodiments, the OSGi application 310 comprises an enterprise information management tool that is implemented within the enterprise application platform 112 and is used to replicate data from different source databases 305 (e.g., source database 305-1, ..., 305-N). The OSGi application 310 may act as a data provisioning agent that collects data from the different source databases 305 and then transmits the collected data to a server 320, where the collected data is persisted in a target database 325.

In some example embodiments, the running of the OSGi application 310 comprises using each one of the plurality of adapter bundles 312 to connect to a corresponding source database 305 and replicate data from the corresponding source database 305. The running of the OSGi application 310 may further comprise transmitting the replicated data to the server 320, where the replicated data is stored in the target database 325 of the server 320. As previously discussed, the monitoring of the performance of the OSGi application, such as monitoring the performance of the above-discussed data replication task, suffers from a lack of dynamic and selective control by a user of performance monitoring without interrupting the running of the OSGi application.

In some example embodiments, the performance monitoring system 300 comprises a profiler bundle 314 that is configured to run concurrently with the running of the OSGi application 310. The profiler bundle 314 may be generated using an AOP extension. AOP is a programming paradigm that increases modularity by allowing the separation of cross-cutting concerns. It does so by adding additional behavior to existing code (an advice) without modifying the code itself, instead separately specifying which code is modified via a pointcut specification. This feature allows behaviors that are not central to the business logic (e.g., logging) to be added to a program without cluttering the code that is core to the functionality.

In aspect-oriented computer programming, a pointcut is a set of join points. Pointcut specifies where exactly to apply advice, which allows separation of concerns and helps in modularizing business logic. Pointcuts may be specified using class names or method names in some cases using regular expressions that match class or method name. Whenever a program execution reaches one of the join points described in the pointcut, a piece of code associated with the pointcut (referred to as advice) is executed, which allows a programmer to describe where and when additional code should be executed in addition to an already defined behavior. This feature permits the addition of aspects to existing software, or the design of software with a clear separation of concerns, wherein the programmer weaves (e.g., merges) different aspects into a complete application.

Spring AOP is a popular AOP tool in Java^{®} programming. However, Spring AOP is not capable of controlling all of the adapter bundles 312 of the OSGi application 310 in one place. In some example embodiments, the profiler bundle 314 may be generated using AspectJ^{™}. Aspect^{™} is an AOP extension for Java^{®} programming and is compatible with OSGi-based applications. By using AspectJ^{™} to generate the profiler bundle 314, one or more pointcuts may be used to define which method or which package to monitor, advice may be used to decide when an aspect should be invoked (e.g., before calling method or after calling method), and the profiler bundle 314 may be started with the adapter bundles 312 and can be disabled easily by uninstalling one or more adapter bundles 312 selectively without impacting the other adapter bundles 312.

In some example embodiments, the running of the profiler bundle 314 comprises collecting performance data for selected ones of the plurality of adapter bundles 312 during the running of the OSGi application 310. The selected ones of the plurality of adapter bundles 312 may be defined based on input provided by a user via a GUI on a computing device 340 of the user during the running of the OSGi application 310. In some example embodiments, the performance data that is collected comprises one or more of a corresponding class used by each one of the selected ones of the plurality of adapter bundles, a corresponding method used by each one of the selected ones of the plurality of adapter bundles, a corresponding argument used by each one of the selected ones of the plurality of adapter bundles, a corresponding duration for each one of the plurality of adapter bundles to connect to the corresponding source database and replicate data from the corresponding source database, and a corresponding creation time indicating, for each one of the plurality of adapter bundles, a corresponding time at which the adapter bundle connected to the corresponding source database and replicated the data from the corresponding source database. Other types of performance data are also within the scope of the present disclosure.

In some example embodiments, the profiler bundle 314 is configured to generate weaved classes using AspectJ^{™} in compiled time. These weaved classes may perform the collection of performance data during the data replication task. Then, the collected performance data may be sent to the profiler bundle 314. In some example embodiments, the profiler bundle 314 is configured to perform one or more functions using the collected performance data. The function(s) may comprise storing the collected performance data in an embedded database 330. The function(s) may additionally or alternatively comprise displaying the collected performance data on the computing device 340 of the user. Other functions are also within the scope of the present disclosure.

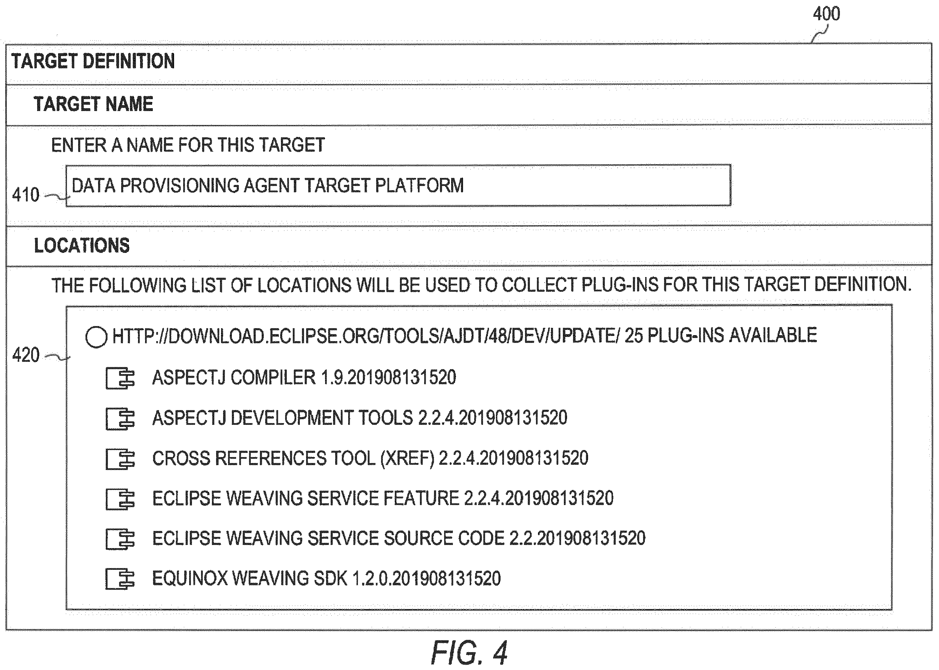

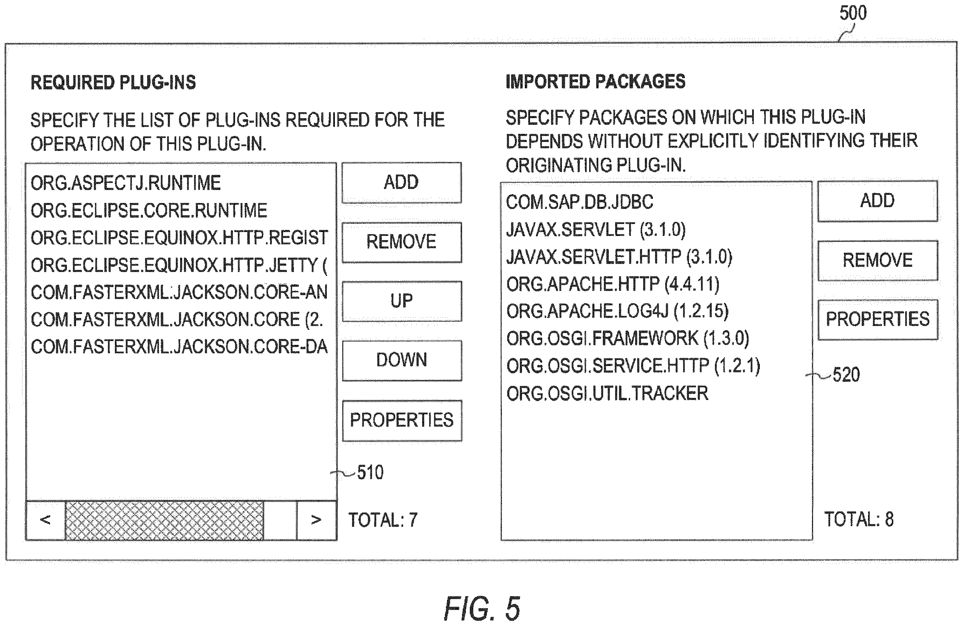

In some example embodiments, the performance monitoring system 300 is configured to enable a user to create a new OSGi application 310 with AspectJ^{™} library dependencies. FIG. 4 illustrates a GUI 400 in which a target platform is defined, in accordance with some example embodiments. The GUI 400 may provide a user interface element 410 within which the user may enter or otherwise provide a name for the target platform for the new OSGi application 310. The GUI 400 may also include another user interface element 420 within which the user may select or otherwise provide AspectJ^{™} dependence library classes. FIG. 5 illustrates a GUI 500 in which AspectJ^{™} dependencies are added, in accordance with some example embodiments. For example, the GUI 500 may include a user interface element 510 from which the user may select plug-ins, which are a part of the selected library classes shown in FIG. 4, as well as a user interface element 520 from which the user may specify packages on which a plug-in depends.

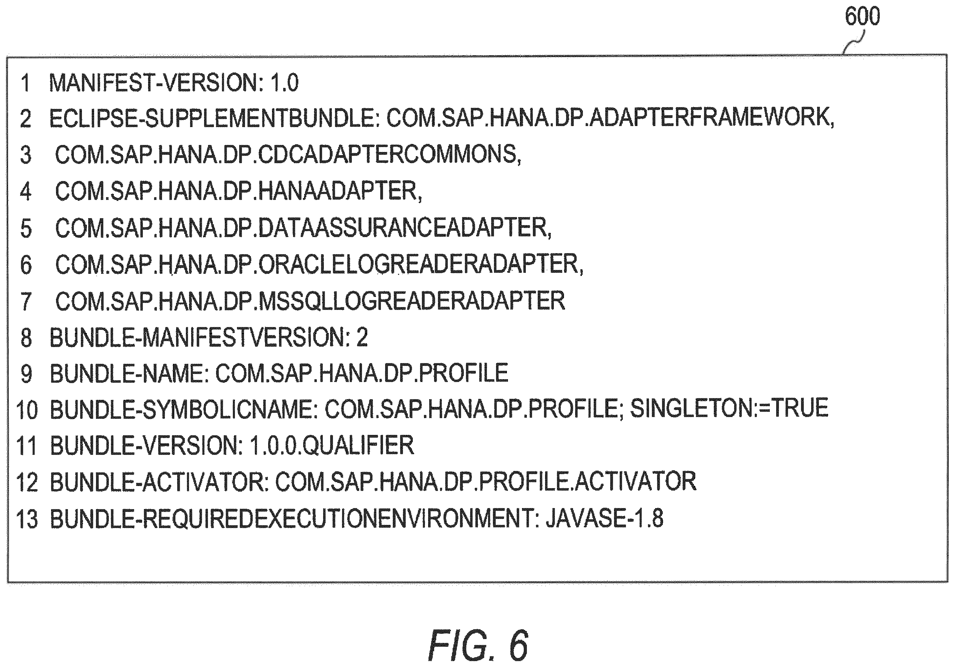

In some example embodiments, the profiler bundle 314 comprises a manifest file that identifies the plurality of adapter bundles 312 that are available to be selected by the user for monitoring of their performance. FIG. 6 illustrates code of a manifest file 600 of the profiler bundle 314, in accordance with some example embodiments. As seen in FIG. 6, the code of the manifest file 600 identifies six adapter bundles on lines 2-7. Other types and configurations of the manifest file are also within the scope of the present disclosure.

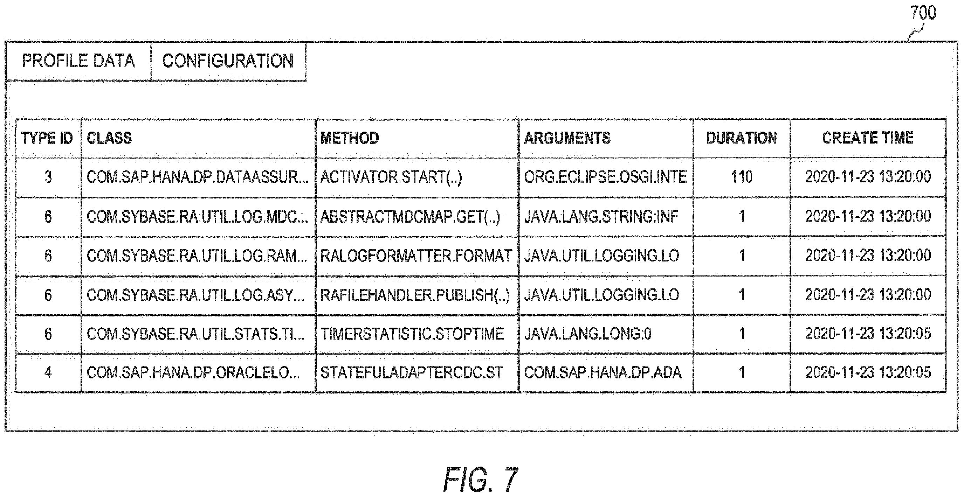

FIG. 7 illustrates a GUI 700 in which a performance monitoring page is displayed, in accordance with some example embodiments. The performance monitoring page of the GUI 700 may be displayed on the computing device 340 of the user and may include performance data that comprises one or more of a corresponding class used by each one of the selected ones of the plurality of adapter bundles, a corresponding method used by each one of the selected ones of the plurality of adapter bundles, a corresponding argument used by each one of the selected ones of the plurality of adapter bundles, a corresponding duration for each one of the plurality of adapter bundles to connect to the corresponding source database and replicate data from the corresponding source database, and a corresponding creation time indicating, for each one of the plurality of adapter bundles, a corresponding time at which the adapter bundle connected to the corresponding source database and replicated the data from the corresponding source database. Other types of performance data are also within the scope of the present disclosure.

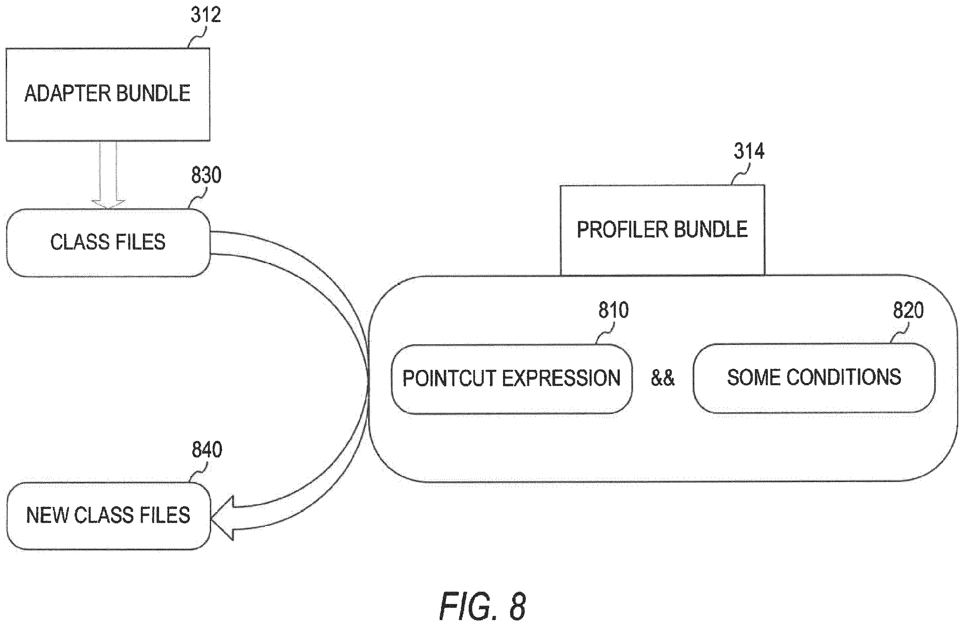

FIG. 8 illustrates the profiler bundle 314 acting as an aspect weaver in order to provide a user with the ability to selectively and dynamically enable or disable performance monitoring of the adapter bundles 312, in accordance with some example embodiments. In the example shown in FIG. 8, the performance monitoring system 300 generates one or more corresponding class files 830 for each one of the plurality of adapter bundles 312. The corresponding class files 830 for the plurality of adapter bundles 312 may generated at compile time.

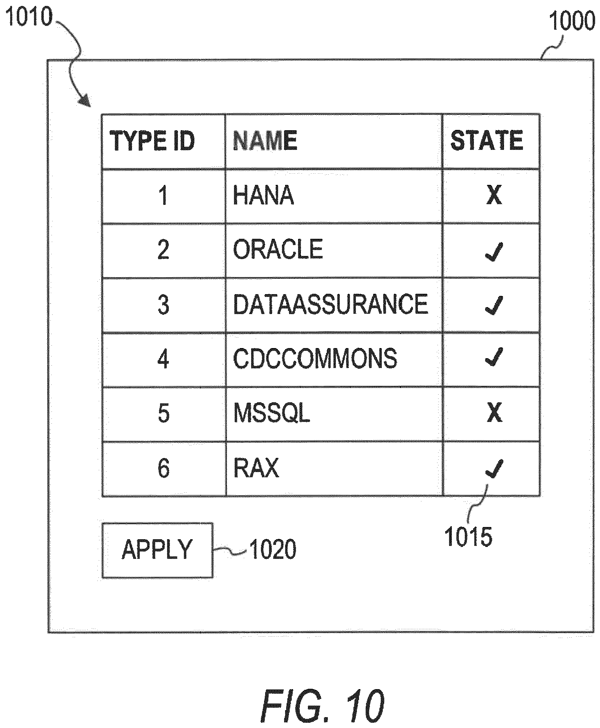

The profiler bundle 314 may act as an aspect weaver to generate woven classes in the form of the new class files 840 based on the corresponding class files 830 for the plurality of adapter bundles 312, a pointcut expression 810 combined with a Boolean condition 820, and an input provided by the user during the running of the OSGi application 310. The performance monitoring system 300 may collect the performance data for the selected ones of the plurality of adapter bundles 312 using the woven classes represented by the new class files 840. In some example embodiments, the performance monitoring system 300 uses the Boolean condition combined with the pointcut expression, and the pointcut expression will take effect only when this Boolean condition is true. The Boolean condition may be determined based on input provided by the user, as will be discussed in further detail below with respect to FIG. 10.

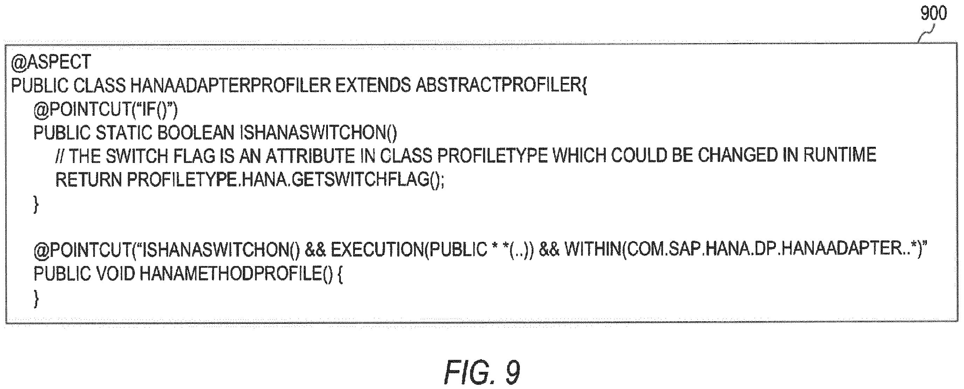

FIG. 9 illustrates pseudocode 900 combining a Boolean condition with a pointcut expression to enable selective control of performance monitoring on individual adapter bundles 312 during runtime, in accordance with some example embodiments. In FIG. 9, the pseudocode 900 defines an if() condition as a pointcut and combines it with the real pointcut expression. So, only is the if() pointcut method returns true will the real pointcut expression will be effect. A corresponding attribute in "ProfileType" class may be created and this attribute may be modified in runtime by setting a new value, such as by the user via a GUI on the computing device 340.

FIG. 10 illustrates a GUI 1000 in which a switch panel 1010 enables a user to selectively control performance monitoring on individual adapter bundles during runtime, in accordance with some example embodiments. The switch panel 1010 comprises a corresponding selectable user interface element 1015 for each adapter bundle 312. In FIG. 10, each adapter bundle 312 is represented by the name of the corresponding source database 305 (e.g., "HANA" and "ORACLE"). The user may provide input by clicking, tapping, or otherwise selecting the corresponding selectable user interface element 1015 of the adapter bundle 312 for which the user wants to switch the performance monitoring state, and then select an "APPLY" button to submit the input for processing and implementation during the weaving of the new class files 840 discussed above with respect to FIG. 8. For example, in FIG. 10, the switch panel 1010 shows that performance monitoring is disabled for the adapter bundle 312 corresponding to the "HANA" source database 305, which is shown in the form of an "X" in the "STATE" column of the switch panel 1010. If the user wants to switch the performance monitoring of the adapter bundle 312 corresponding to the "HANA" source database 305 from disabled to enabled during the runtime of the OSGi application 310 without having to interrupt the running of the OSGi application, the user may simply select the selectable user interface element 1015 corresponding to the adapter bundle 312 for the "HANA" source database 305.

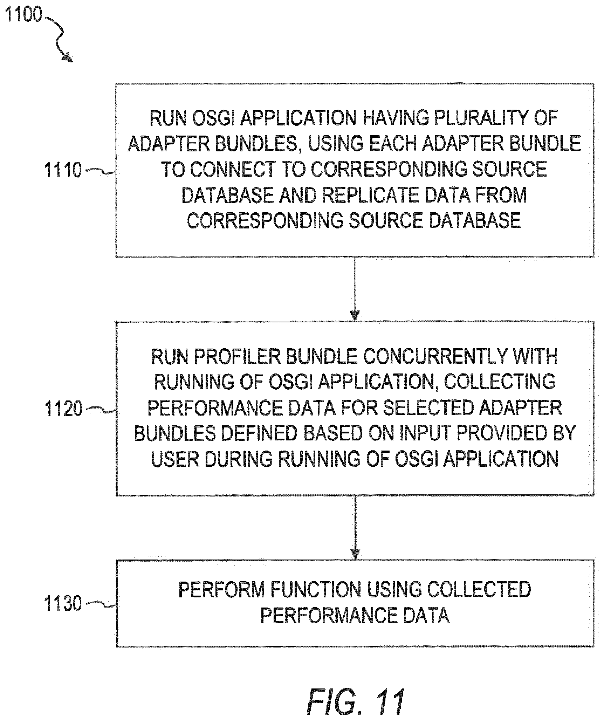

FIG. 11 is a flowchart 1100 illustrating a method of monitoring performance of an OSGi application having multiple bundles, in accordance with some example embodiments. The method 1100 can be performed by processing logic that can comprise hardware (e.g., circuitry, dedicated logic, programmable logic, microcode, etc.), software (e.g., instructions run on a processing device), or a combination thereof. In one example embodiment, one or more of the operations of the method 1100 are performed by the performance monitoring system 300 of FIG. 3.

At operation 1110, the performance monitoring system 300 runs an OSGi application having a plurality of adapter bundles 312. In some example embodiments, the running of the OSGi application comprises using each one of the plurality of adapter bundles 312 to connect to a corresponding source database 305 and replicate data from the corresponding source database 305. The running of the OSGi application may further comprise transmitting the replicated data to a server (e.g., the data provisioning server 320) for storage in a target database (e.g., the target database 325) of the server.

The performance monitoring system 300 may run a profiler bundle 314 concurrently with the running of the OSGi application, at operation 1120. In some example embodiments, the profiler bundle 314 is generated using an AOP extension. For example, the profiler bundle 314 may be generated using AspectJ^{™}. In some example embodiments, the running of the profiler bundle 314 comprises collecting performance data (e.g., class, method, argument, duration, creation time) for selected ones of the plurality of adapter bundles 312 during the running of the OSGi application. The selected ones of the plurality of adapter bundles 312 may be defined based on input provided by a user via a GUI during the running of the OSGi application. In some example embodiments, the profiler bundle 314 comprises a manifest file that identifies the plurality of adapter bundles 312 that are available for selection by the user.

Then, at operation 1130, the performance monitoring system 300 performs a function using the collected performance data. In some example embodiments, the function comprises storing the collected performance data in the embedded database 330. The function may additionally or alternatively comprise displaying the collected performance data on the computing device 340 of the user. Other functions are also within the scope of the present disclosure.

It is contemplated that any of the other features described within the present disclosure can be incorporated into the method 1100.

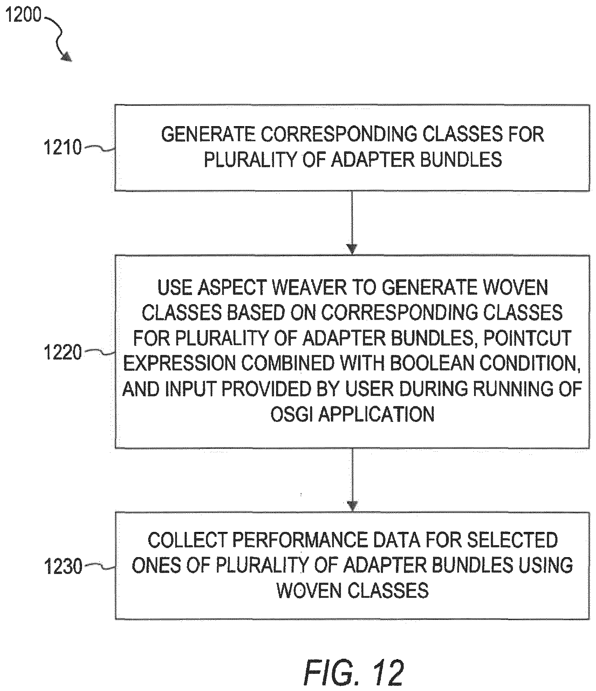

FIG. 12 is a flowchart illustrating a method of collecting performance data, in accordance with some example embodiments. The method 1200 can be performed by processing logic that can comprise hardware (e.g., circuitry, dedicated logic, programmable logic, microcode, etc.), software (e.g., instructions run on a processing device), or a combination thereof. In one example embodiment, one or more of the operations of the method 1200 are performed by the performance monitoring system 300 of FIG. 3.

At operation 1210, the performance monitoring system 300 generates a corresponding class (e.g., class files 830) for each one of the plurality of adapter bundles. The corresponding classes for the plurality of adapter bundles may generated at compile time.

The performance monitoring system 300, at operation 1220, uses an aspect weaver (e.g., the profiler bundle 314) to generate woven classes (e.g., the new class files 840) based on the corresponding classes for the plurality of adapter bundles 312, a pointcut expression 810 combined with a Boolean condition 820, and the input provided by the user during the running of the OSGi application.

Then, the performance monitoring system 300 may collect the performance data for the selected ones of the plurality of adapter bundles 312 using the woven classes, at operation 1230. In some example embodiments, the performance data that is collected comprises one or more of a corresponding class used by each one of the selected ones of the plurality of adapter bundles, a corresponding method used by each one of the selected ones of the plurality of adapter bundles, a corresponding argument used by each one of the selected ones of the plurality of adapter bundles, a corresponding duration for each one of the plurality of adapter bundles to connect to the corresponding source database and replicate data from the corresponding source database, and a corresponding creation time indicating, for each one of the plurality of adapter bundles, a corresponding time at which the adapter bundle connected to the corresponding source database and replicated the data from the corresponding source database.

It is contemplated that any of the other features described within the present disclosure can be incorporated into the method 1200.

In view of the disclosure above, various examples are set forth below. It should be noted that one or more features of an example, taken in isolation or combination, should be considered within the disclosure of this application.

Example 1 includes a computer-implemented method performed by a computer system having a memory and at least one hardware processor, the computer-implemented method comprising: running an Open Services Gateway Initiative (OSGi) application having a plurality of adapter bundles, the running of the OSGi application comprising using each one of the plurality of adapter bundles to connect to a corresponding source database and replicate data from the corresponding source database; running a profiler bundle concurrently with the running of the OSGi application, the profiler bundle being generated using an aspect-oriented programming (AOP) extension, the running of the profiler bundle comprising collecting performance data for selected ones of the plurality of adapter bundles during the running of the OSGi application, the selected ones of the plurality of adapter bundles being defined based on input provided by a user via a graphic user interface (GUI) during the running of the OSGi application; and performing a function using the collected performance data.

Example 2 includes the computer-implemented method of example 1, wherein the collecting of the performance data comprises: generating a corresponding class for each one of the plurality of adapter bundles; using an aspect weaver to generate woven classes based on the corresponding classes for the plurality of adapter bundles, a pointcut expression combined with a Boolean condition, and the input provided by the user during the running of the OSGi application; and collecting the performance data for the selected ones of the plurality of adapter bundles using the woven classes.

Example 3 includes the computer-implemented method of example 1 or example 2, wherein the profiler bundle comprises a manifest file that identifies the plurality of adapter bundles.

Example 4 includes the computer-implemented method of any one of examples 1 to 3, wherein the AOP extension comprises AspectJ^{™}.

Example 5 includes the computer-implemented method of any one of examples 1 to 4, wherein the running of the OSGi application further comprising transmitting the replicated data to a server for storage in a target database of the server.

Example 6 includes the computer-implemented method of any one of examples 1 to 5, wherein the performance data comprises a corresponding class used by each one of the selected ones of the plurality of adapter bundles.

Example 7 includes the computer-implemented method of any one of examples 1 to 6, wherein the performance data comprises a corresponding method used by each one of the selected ones of the plurality of adapter bundles.

Example 8 includes the computer-implemented method of any one of examples 1 to 7, wherein the performance data comprises a corresponding argument used by each one of the selected ones of the plurality of adapter bundles.

Example 9 includes the computer-implemented method of any one of examples 1 to 8, wherein the performance data comprises a corresponding duration for each one of the plurality of adapter bundles to connect to the corresponding source database and replicate data from the corresponding source database.

Example 10 includes the computer-implemented method of any one of examples 1 to 9, wherein the performance data comprises a corresponding creation time indicating, for each one of the plurality of adapter bundles, a corresponding time at which the adapter bundle connected to the corresponding source database and replicated the data from the corresponding source database.

Example 11 includes the computer-implemented method of any one of examples 1 to 10, wherein the function comprises storing the collected performance data in an embedded database.

Example 12 includes the computer-implemented method of any one of examples 1 to 11, wherein the function comprises displaying the collected performance data on a computing device of the user.

Example 13 includes a system comprising: at least one processor; and a non-transitory computer-readable medium storing executable instructions that, when executed, cause the at least one processor to perform the method of any one of examples 1 to 12.

Example 14 includes a non-transitory machine-readable storage medium, tangibly embodying a set of instructions that, when executed by at least one processor, causes the at least one processor to perform the method of any one of examples 1 to 12.

Example 15 includes a machine-readable medium carrying a set of instructions that, when executed by at least one processor, causes the at least one processor to carry out the method of any one of examples 1 to 12.

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., a standalone, client, or server computer, system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses that connect the hardware modules). In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the network 114 of FIG. 1) and via one or more appropriate interfaces (e.g., APIs).

Example embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a stand-alone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry (e.g., a FPGA or an ASIC).

A computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or a combination of permanently and temporarily configured hardware may be a design choice. Below are set out hardware (e.g., machine) and software architectures that may be deployed, in various example embodiments.

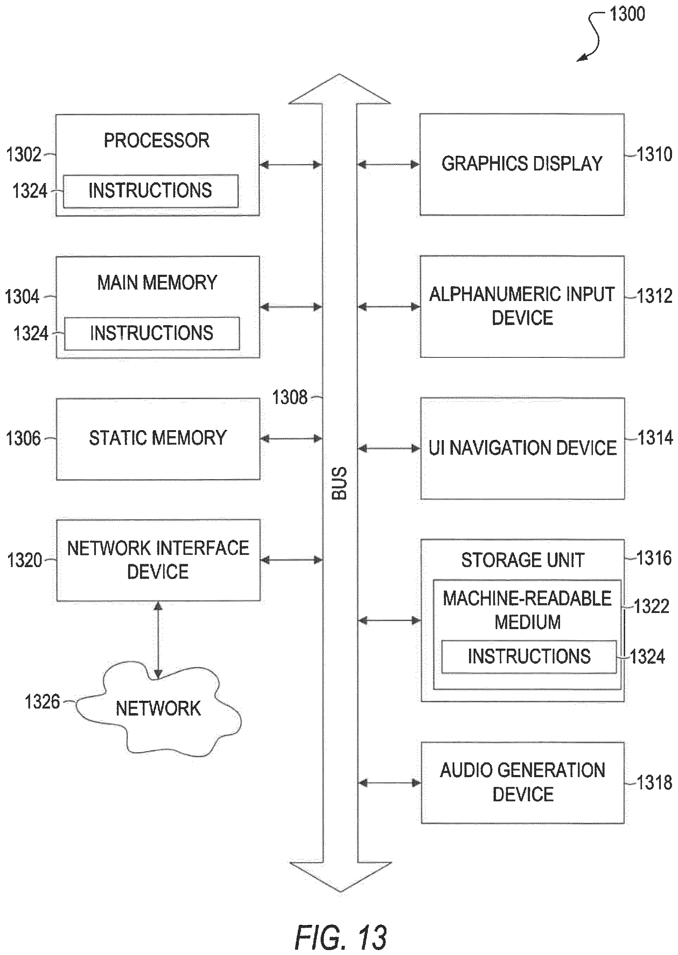

FIG. 13 is a block diagram of a machine in the example form of a computer system 1300 within which instructions 1324 for causing the machine to perform any one or more of the methodologies discussed herein may be executed. In alternative embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1300 includes a processor 1302 (e.g., a central processing unit (CPU), a graphics processing unit (GPU) or both), a main memory 1304, and a static memory 1306, which communicate with each other via a bus 1308. The computer system 1300 may further include a graphics or video display unit 1310 (e.g., a liquid crystal display (LCD) or a cathode ray tube (CRT)). The computer system 1300 also includes an alphanumeric input device 1312 (e.g., a keyboard), a user interface (UI) navigation (or cursor control) device 1314 (e.g., a mouse), a storage unit (e.g., a disk drive unit) 1316, an audio or signal generation device 1318 (e.g., a speaker), and a network interface device 1320.

The storage unit 131.6 includes a machine-readable medium 1322 on which is stored one or more sets of data structures and instructions 1324 (e.g., software) embodying or utilized by any one or more of the methodologies or functions described herein. The instructions 1324 may also reside, completely or at least partially, within the main memory 1304 and/or within the processor 1302 during execution thereof by the computer system 1300, the main memory 1304 and the processor 1302 also constituting machine-readable media. The instructions 1324 may also reside, completely or at least partially, within the static memory 1306.

While the machine-readable medium 1322 is shown in an example embodiment to be a single medium, the term "machine-readable medium" may include a single medium or multiple media (e.g., a centralized or distributed database, and/or associated caches and servers) that store the one or more instructions 1324 or data structures. The term "machine-readable medium" shall also be taken to include any tangible medium that is capable of storing, encoding or carrying instructions for execution by the machine and that cause the machine to perform any one or more of the methodologies of the present embodiments, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices (e.g., Erasable Programmable Read-Only Memory (EPROM), Electrically Erasable Programmable Read-Only Memory (EEPROM), and flash memory devices); magnetic disks such as internal hard disks and removable disks; magneto-optical disks; and compact disc-read-only memory (CD-ROM) and digital versatile disc (or digital video disc) read-only memory (DVD-ROM) disks.

The instructions 1324 may further be transmitted or received over a communications network 1326 using a transmission medium. The instructions 1324 may be transmitted using the network interface device 1320 and any one of a number of well-known transfer protocols (e.g., HTTP). Examples of communication networks include a LAN, a WAN, the Internet, mobile telephone networks, POTS networks, and wireless data networks (e.g., WiFi and WiMAX networks). The term "transmission medium" shall be taken to include any intangible medium capable of storing, encoding, or carrying instructions for execution by the machine, and includes digital or analog communications signals or other intangible media to facilitate communication of such software.

Each of the features and teachings disclosed herein can be utilized separately or in conjunction with other features and teachings to provide a system and method for blind spot implementation in neural networks. Representative examples utilizing many of these additional features and teachings, both separately and in combination, are described in further detail with reference to the attached figures. This detailed description is merely intended to teach a person of skill in the art further details for practicing certain aspects of the present teachings and is not intended to limit the scope of the claims. Therefore, combinations of features disclosed above in the detailed description may not be necessary to practice the teachings in the broadest sense, and are instead taught merely to describe particularly representative examples of the present teachings.

Some portions of the detailed descriptions herein are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the below discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present disclosure also relates to an apparatus for performing the operations herein. This apparatus may be specially constructed for the required purposes, or it may include a general purpose computer selectively activated or reconfigured by a computer program stored in the computer. Such a computer program may be stored in a computer readable storage medium, such as, but not limited to, any type of disk, including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The example methods or algorithms presented herein are not inherently related to any particular computer or other apparatus. Various general purpose systems, computer servers, or personal computers may be used with programs in accordance with the teachings herein, or it may prove convenient to construct a more specialized apparatus to perform the method steps disclosed herein. The structure for a variety of these systems will appear from the description herein. It will be appreciated that a variety of programming languages may be used to implement the teachings of the disclosure as described herein.

Moreover, the various features of the representative examples and the dependent claims may be combined in ways that are not specifically and explicitly enumerated in order to provide additional useful embodiments of the present teachings. It is also expressly noted that all value ranges or indications of groups of entities disclose every possible intermediate value or intermediate entity for the purpose of original disclosure, as well as for the purpose of restricting the claimed subject matter. It is also expressly noted that the dimensions and the shapes of the components shown in the figures are designed to aid in understanding how the present teachings are practiced, but not intended to limit the dimensions and the shapes shown in the examples.

Although an embodiment has been described with reference to specific example embodiments, it will be evident that various modifications and changes may be made to these embodiments without departing from the broader spirit and scope of the present disclosure. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computer-implemented method performed by a computer system having a memory and at least one hardware processor, the computer-implemented method comprising:
running an Open Services Gateway Initiative (OSGi) application having a plurality of adapter bundles, the running of the OSGi application comprising using each one of the plurality of adapter bundles to connect to a corresponding source database and replicate data from the corresponding source database;
running a profiler bundle concurrently with the running of the OSGi application, the profiler bundle being generated using an aspect-oriented programming (AOP) extension, the running of the profiler bundle comprising collecting performance data for selected ones of the plurality of adapter bundles during the running of the OSGi application, the selected ones of the plurality of adapter bundles being defined based on input provided by a user via a graphic user interface (GUI) during the running of the OSGi application; and
performing a function using the collected performance data.

2. The computer-implemented method of claim 1, wherein the collecting of the performance data comprises:
generating a corresponding class for each one of the plurality of adapter bundles;
using an aspect weaver to generate woven classes based on the corresponding classes for the plurality of adapter bundles, a pointcut expression combined with a Boolean condition, and the input provided by the user during the running of the OSGi application; and
collecting the performance data for the selected ones of the plurality of adapter bundles using the woven classes.

3. The computer-implemented method of claim 1 or 2, wherein the profiler bundle comprises a manifest file that identifies the plurality of adapter bundles.

4. The computer-implemented method of any one of the preceding claims, wherein the AOP extension comprises AspectJ^{™}.

5. The computer-implemented method of any one of the preceding claims, wherein the running of the OSGi application further comprising transmitting the replicated data to a server for storage in a target database of the server.

6. The computer-implemented method of any one of the preceding claims, wherein the performance data comprises a corresponding class used by each one of the selected ones of the plurality of adapter bundles.

7. The computer-implemented method of any one of the preceding claims, wherein the performance data comprises a corresponding method used by each one of the selected ones of the plurality of adapter bundles.

8. The computer-implemented method of any one of the preceding claims, wherein the performance data comprises a corresponding argument used by each one of the selected ones of the plurality of adapter bundles.

9. The computer-implemented method of any one of the preceding claims, wherein the performance data comprises a corresponding duration for each one of the plurality of adapter bundles to connect to the corresponding source database and replicate data from the corresponding source database.

10. The computer-implemented method of any one of the preceding claims, wherein the performance data comprises a corresponding creation time indicating, for each one of the plurality of adapter bundles, a corresponding time at which the adapter bundle connected to the corresponding source database and replicated the data from the corresponding source database.

11. The computer-implemented method of any one of the preceding claims, wherein the function comprises storing the collected performance data in an embedded database.

12. The computer-implemented method of any one of the preceding claims, wherein the function comprises displaying the collected performance data on a computing device of the user.

13. A system of comprising:
at least one hardware processor of a managed private cloud architecture serving an organization; and
a non-transitory computer-readable medium of the managed private cloud architecture, the non-transitory computer-readable medium storing executable instructions that, when executed, cause the at least one processor to perform operations according to a method of any one of claims 1 to 12.

14. A non-transitory machine-readable storage medium of a managed private cloud architecture serving an organization, the non-transitory machine-readable storage medium tangibly embodying a set of instructions that, when executed by at least one hardware processor, causes the at least one processor to perform operations according to a method of any one of claims 1 to 12.
